# EUROPEAN PATENT APPLICATION

(11) **EP 4 391 301 A1**
(43) Date of publication of application: **26.06.2024**
(21) Application number: 22214689.6
(22) Date of filing: 19.12.2022
(51) Int. Cl.: H02J 50/10, H02J 50/80

(54) **WIRELESS POWER TRANSFER**

(71) Applicant: Koninklijke Philips N.V., 5656 AG Eindhoven (NL)
(72) Inventor: AGAFONOV, Aleksei, 5656AG Eindhoven (NL); LEBENS, Pascal Leonard Maria Theodoor, 5656AG Eindhoven (NL); DRAAK, Johannes Wilhelmus, 5656AG Eindhoven (NL)
(74) Representative: Philips Intellectual Property & Standards

(57) **Abstract**

A power transmitter (101) wirelessly provides power to a power receiver (105) via a power transfer signal generated by a power transfer coil (103). A communication driver (209) generates a communication drive signal for a communication coil (207) to generate a communication carrier signal. The power transmitter can operate in a connected mode in which the communication carrier signal is active no less than 50% of the time and a lower power consumption standby mode in which the communication carrier signal is active no more than 50% of the time. A mode controller (203) may switch the power transmitter from the connected mode to the standby mode when a timer (211) expires. The duration of the timer is set based on a standby time out indication transmitted to the power transmitter (101) from the power receiver (105). The approach may provide low power consumption, yet responsive response adapted to the specific power receiver.

## Description

### FIELD OF THE INVENTION

The invention relates to operation of a wireless power transfer from a power transmitter to a power receiver, and in particular, but not exclusively, to wirelessly transfer power to a high power device, such as a kitchen appliance.

### BACKGROUND OF THE INVENTION

Most present-day electrical products require a dedicated electrical contact in order to be powered from an external power supply. However, this tends to be impractical and requires the user to physically insert connectors or otherwise establish a physical electrical contact. Typically, power requirements also differ significantly, and currently most devices are provided with their own dedicated power supply resulting in a typical user having a large number of different power supplies with each power supply being dedicated to a specific device. Although, the use of internal batteries may avoid the need for a wired connection to a power supply during use, this only provides a partial solution as the batteries will need recharging (or replacing). The use of batteries may also add substantially to the weight and potentially cost and size of the devices.

In order to provide a significantly improved user experience, it has been proposed to use a wireless power supply where power is inductively transferred from a transmitter inductor in a power transmitter device to a receiver coil in the individual devices.

Power transmission via magnetic induction is a well-known concept, mostly applied in transformers having a tight coupling between a primary transmitter inductor/coil and a secondary receiver coil. By separating the primary transmitter coil and the secondary receiver coil between two devices, wireless power transfer between these becomes possible based on the principle of a loosely coupled transformer.

Such an arrangement allows a wireless power transfer to the device without requiring any wires or physical electrical connections to be made. Indeed, it may simply allow a device to be placed adjacent to, or on top of, the transmitter coil in order to be recharged or powered externally. For example, power transmitter devices may be arranged with a horizontal surface on which a device can simply be placed in order to be powered.

Furthermore, such wireless power transfer arrangements may advantageously be designed such that the power transmitter device can be used with a range of power receiver devices. In particular, a wireless power transfer approach, known as the Qi Specifications, has been defined and is currently being developed further. This approach allows power transmitter devices that meet the Qi Specifications to be used with power receiver devices that also meet the Qi Specifications without these having to be from the same manufacturer or having to be dedicated to each other. The Qi standard further includes some functionality for allowing the operation to be adapted to the specific power receiver device (e.g. dependent on the specific power drain).

The Wireless Power Consortium has on the basis of the Qi Specification proceeded to develop the Ki Specification (also known as the Cordless Kitchen Specification) which is aimed at providing safe, reliable, and efficient wireless power transfer to kitchen appliances. Ki supports much higher power levels up to 2.5KW.

In many systems, such as specifically Qi systems, communication from the power receiver to the power transmitter may use load modulation where a load of the power transfer signal is varied in dependence on the data to be transmitted. However, such load modulation may be difficult to detect if the power transfer loading of the power transfer signal varies at the same time. Similarly, communication from the power transmitter to the power receiver may be achieved by modulating the power transfer signal (e.g. amplitude or frequency modulation) but interference to such modulation may be caused by variations in the parameters of the power transfer signal due to e.g. a varying load.

In some systems it has accordingly been proposed to use a completely separate communication approach. Specifically, Ki wireless power transfer systems may establish a two way communication link using the Near Field Communication, NFC, standard. The communication is during the power transfer phase performed in short time intervals in order to avoid or reduce interference between the power transfer and the communication. The power receiver is arranged to detect the NFC carrier to perform the communication during the short time intervals.

During power transfer operation, the power receiver extracts power for a load from the power transfer signal. In many cases, the extraction of power is also used to power e.g. functionality of the power receiver itself, such as processing units, user interfaces etc. However, such an approach requires additional functionality and may not be optimal in all scenarios.

It has been proposed that power may be extracted from an NFC carrier in order to power low power consumption electronic circuitry. However, although such an approach may be useful in many scenarios, it tends to be suboptimal in some respects. For example, it tends to provide a suboptimal initialization and continuous supply of power that may not in all cases be ideal for the circuit being supplied.

A particular problem for some power receiver devices is that power transfer may not be required immediately when they are positioned in a power transfer position for a given power transmitter. This may result in a scenario where the power transmitter and power receiver interact (e.g. communicate with each other) but without this necessarily leading to a power transfer being started in the short term. For example, systems such as Ki enter a connected phase where communication is performed while waiting for a change, such as e.g. a request for a power transfer system to begin. However, a problem with such a state is that it tends to consume power and even if the power consumption is relatively low, the state may continue for a long time (e.g. hours or even days) resulting in a high energy consumption. For example, a kettle may be permanently placed on a power transmitter but with water only being boiled with long intervening intervals.

Switching to a lower power state may be attractive but this tends to be suboptimal as it typically results in slower operation and user interaction. Further, which state to optimally use for different scenarios and appliances may vary and therefore optimization of trade-offs, such as between power efficiency and user convenience, may be very challenging.

Hence, an improved operation for a wireless power transfer system would be advantageous, in particular, an approach allowing increased flexibility, reduced cost, reduced complexity, improved communication, additional functionality, improved secondary power provision, reduced power consumption (in particular outside of power transfer), improved operation, improved trade-off between power consumption and user responsiveness and experience, improved adaptation to different devices, suitability for systems with non-homogenous power receivers, and/or improved performance would be advantageous.

### SUMMARY OF THE INVENTION

Accordingly, the Invention seeks to preferably mitigate, alleviate or eliminate one or more of the above mentioned disadvantages singly or in any combination.

According to an aspect of the invention, there is provided a power transmitter for wirelessly providing power to a power receiver via an inductive power transfer signal, the power transmitter comprising: a power transfer coil arranged to generate the power transfer signal; a power transfer driver arranged to generate a power transfer drive signal for the power transfer coil, the power transfer driver being arranged to, during a power transfer phase, generate the power transfer drive signal; a communication coil arranged to generate a communication carrier signal; a communication driver arranged to generate a communication drive signal for the communication coil to generate the communication carrier signal; a communication unit arranged to communicate with the power receiver using modulation of the communication carrier signal; wherein the communication unit is arranged to receive a configuration message from the power receiver, the configuration message comprising a standby time out indication; a mode controller arranged to control the power transmitter to switch the power transmitter between different modes including: a power transfer mode in which the power transfer signal is generated by the power transfer driver generating the drive signal; a connected mode in which no power transfer signal is generated and during which the communication carrier is generated for no less than 50% of the time; a standby mode in which no power transfer signal is generated and during which the communication carrier is generated for no more than 10% of the time; the mode controller in the connected mode being arranged to initiate a timer with an initial timing duration determined in dependence on the standby time out indication; and to transition the power transmitter from the connected mode to the standby mode in response to the timer expiring.

The invention may allow improved performance and/or operation and/or implementation in many embodiments. It may allow an overall improved power transfer operation in many systems and embodiments.

The approach may in many embodiments provide a substantially reduced power consumption while at the same time allowing a suitable response time. It may allow the trade-off between power consumption and response time to be adapted to the specific properties, requirements, and/or preferences of the individual power receiver. Improved and more user friendly low power standby operation can typically be achieved. Reduced power consumption can in many embodiments be achieved while reducing the impact on the user experience.

The approach may in many scenarios may be particularly suitable for power transfer systems including a variety of different power receiver devices with different properties and characteristics.

The power transfer drive signal/ power transfer signal may be generated to employ a repeating time frame comprising power transfer intervals in which the power transfer signal is generated and non-power transfer time intervals in which no power transfer signal is generated. The power transfer time intervals may comprise at least 50%, 60%, 70%, 80%, or 90% of the repeating time frame.

The communication drive signal/ communication carrier signal may be generated to employ a repeating time frame comprising communication time intervals in which the communication carrier signal is generated and non-communication time intervals in which no communication carrier signal is generated. The communication time intervals may comprise no more than 1%, 2%, 5%, or 10% of the repeating time frame.

The timer expiring/ timing out may occur after the initial timing duration (unless the timing duration is changed in the intervening time).

The power transmitter operating in a connected mode, standby mode, and/or power transfer mode may be replaced by an equivalent reference to the power transmitter operating in a connected phase, standby phase, and/or power transfer phase respectively.

The approach may provide a secondary/ auxiliary power transfer path utilizing a communication path thereby providing a synergistic interoperability between communication and auxiliary power provision.

In many embodiments, the approach may allow reduced complexity of the power receiver and may in many cases remove the need for the power receiver to include functionality for extracting power from the power transfer signal for internal power receiver circuitry.

An improved control and typically dynamic performance of the auxiliary power provision can often be achieved while at the same time allowing the system to enter e.g. an extremely low power consumption standby phase. The standby mode/ phase may consume less power than the connected mode/ phase.

In accordance with an optional feature of the invention, the mode controller circuit is arranged to initiate the timer in response to the power transmitter entering the connected mode.

This may allow improved operation and/or facilitate implementation and/or allow improved performance/ power transfer. It may in particular allow an efficient adaptation of when to enter the standby phase.

In accordance with an optional feature of the invention, the apparatus further comprises a user interface for detecting user actions; and wherein the mode controller circuit is arranged to increase a remaining duration for the timer in response to a detection of a user action.

This may allow particularly advantageous operation and adaptation in many embodiments. It may typically allow an improved user experience with a reduced perceived impact of the implementation of a low power consumption standby phase.

In accordance with an optional feature of the invention, the communication unit is arranged to receive a timer duration increase request from the power receiver; and wherein the mode controller circuit is arranged to increase a remaining duration for the timer in response to receiving the timer duration increase request from the power receiver.

This may allow particularly advantageous operation and adaptation in many embodiments. It may typically allow an improved user experience with a reduced perceived impact of the implementation of a low power consumption standby phase. The approach may in many embodiments and scenarios allow an improved trade-off between response times and power consumption preferences.

In accordance with an optional feature of the invention, the timer duration increase request is a user action indication indicative of a user action being detected at the power receiver.

This may allow particularly advantageous operation and adaptation in many embodiments. It may typically allow an improved user experience with a reduced perceived impact of the implementation of a low power consumption standby phase. The approach may in many embodiments and scenarios allow an improved trade-off between reaction times to user actions with the power receiver and reduced power consumption.

In accordance with an optional feature of the invention, the mode controller circuit is arranged to reset the timer to the initial timing duration in response to receiving the timer duration increase request.

This may allow improved operation and/or facilitate implementation and/or allow improved performance/ power transfer. In particular, the approach may provide a low complexity and reliable operation.

In accordance with an optional feature of the invention, the timer duration increase request comprises a timer duration increase value and the mode controller circuit is arranged to increase a remaining timer duration for the timer by an amount determined in dependence on the timer duration increase value.

This may allow improved operation and/or facilitate implementation and/or allow improved performance/ power transfer. It may in particular allow an efficient adaptation of the standby operation to the specific power receiver and current user action at the power receiver.

In accordance with an optional feature of the invention, the mode controller circuit may be arranged to initialize the timer with a default initial timing duration if no standby time out indication has been received from the power receiver.

This may allow the power transmitter to interact with an increased variety of power receiver devices and may in particular provide an improved backwards compatibility in many systems and scenarios.

In accordance with an optional feature of the invention, the mode controller circuit is arranged to initiate transition of the power transmitter from the standby mode to the connected mode in response to receiving a message from the power receiver.

This may allow improved operation and/or facilitate implementation and/or allow improved performance/ power transfer.

In accordance with an optional feature of the invention, the communication driver is arranged to generate the communication drive signal in repeated time intervals when in the standby mode; and the mode controller circuit is arranged to set a timing parameter for the repeated time intervals in response to a timing message received from the power receiver.

This may allow improved operation and/or facilitate implementation and/or allow improved performance/ power transfer. In particular, it may allow the trade-off between power consumption and reaction times when in the standby mode to be adapted to the specific power receiver.

In accordance with an optional feature of the invention, the mode controller circuit is arranged to initialize a standby timer with a standby timing duration upon entering the standby mode; and to initiate transition to the connected phase on expiry of the standby timer.

This may allow improved operation and/or facilitate implementation and/or allow improved performance/ power transfer. It may in many scenarios enable or facilitate additional functionality such as allowing the power transmitter to control when the power receiver is activated.

In accordance with an optional feature of the invention, the mode controller circuit is arranged to determine the standby timing duration in dependence on a standby timing indication received from the power receiver.

This may allow improved operation and/or facilitate implementation and/or allow improved performance/ power transfer. It may in many scenarios enable or facilitate additional functionality such as allowing the power transmitter to control when the power receiver is activated while ensuring that this is in accordance with the specific preferences of the power receiver. The approach may allow reduced complexity of the power receiver as wake-up monitoring and actions for the power receiver may be performed by the power transmitter.

In accordance with an optional feature of the invention, the communication unit is arranged to receive standby wake up data from the power receiver; and the mode controller circuit is arranged to control the communication unit to transmit a wake up message to the power transmitter when transitioning to the connected phase on expiry of the standby timer; the wake up message comprising data dependent on the standby wake up data received from the power receiver.

This may allow improved operation and/or facilitate implementation and/or allow improved performance/ power transfer. The approach may allow reduced complexity of the power receiver as wake-up monitoring and actions for the power receiver may be performed by the power transmitter.

According to an aspect of the invention there is provided a method of operation for a power transmitter wirelessly providing power to a power receiver via an inductive power transfer signal, the power transmitter comprising: a power transfer coil arranged to generate the power transfer signal; a communication coil arranged to generate a communication carrier signal; and the method comprising: generating a power transfer drive signal for the power transfer coil to generate the power transfer signal during a power transfer phase; generating a communication drive signal for the communication coil to generate the communication carrier signal; communicating with the power receiver using modulation of the communication carrier signal; receiving a configuration message from the power receiver, the configuration message comprising a standby time out indication; controlling the power transmitter to switch the power transmitter between different modes including: a power transfer mode in which the power transfer signal is generated by the power transfer driver generating the drive signal; a connected mode in which no power transfer signal is generated and during which the communication carrier is generated for no less than 50% of the time; a standby mode in which no power transfer signal is generated and during which the communication carrier is generated for no more than 10% of the time; initiating a timer with an initial timing duration determined in dependence on the standby time out indication; and transitioning the power transmitter from the connected mode to the standby mode in response to the timer expiring.

These and other aspects, features and advantages of the invention will be apparent from and elucidated with reference to the embodiment(s) described hereinafter.

### BRIEF DESCRIPTION OF THE DRAWINGS

Embodiments of the invention will be described, by way of example only, with reference to the drawings, in which
FIG. 1 illustrates an example of elements of a power transfer system in accordance with some embodiments of the invention;
FIG. 2 illustrates an example of elements of a power transmitter in accordance with some embodiments of the invention;
FIG. 3 illustrates an example of elements of a power receiver in accordance with some embodiments of the invention;
FIG. 4 illustrates an example of a time frame for a wireless power transfer system in accordance with some embodiments of the invention;
FIG. 5 illustrates an example of elements of a power transfer path for a wireless power transfer operation;
FIG. 6 illustrates an example of a communication carrier signal in a wireless power transfer system in accordance with some embodiments of the invention; and
FIG. 7 illustrates an example of a communication and interaction protocol for a wireless power transfer system in accordance with some embodiments of the invention.

### DETAILED DESCRIPTION OF THE EMBODIMENTS

The following description focuses on embodiments of the invention applicable to a wireless power transfer system utilizing a power transfer approach such as known from the Ki specification. However, it will be appreciated that the invention is not limited to this application but may be applied to many other wireless power transfer systems.

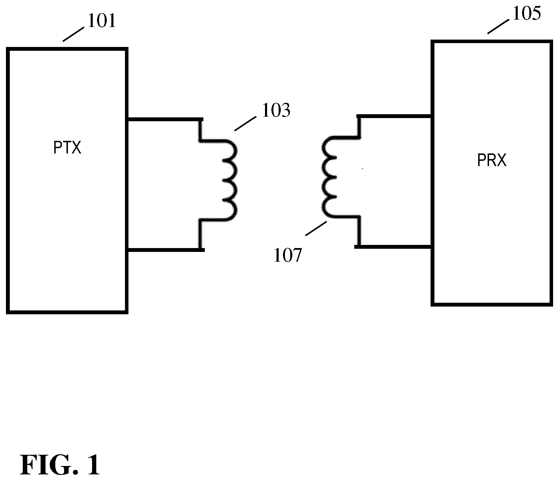

FIG. 1 illustrates an example of a power transfer system in accordance with some embodiments of the invention. The power transfer system comprises a power transmitter 101 which includes (or is coupled to) a transmitter coil / inductor 103. The system further comprises a power receiver 105 which includes (or is coupled to) a receiver coil/ inductor 107.

The system provides an electromagnetic power transfer signal which may inductively transfer power from the power transmitter 101 to the power receiver 105. Specifically, the power transmitter 101 generates an electromagnetic signal, which is propagated as a magnetic flux by the transmitter coil or inductor 103. The power transfer signal may correspond to the electromagnetic power transfer component representing the energy transfer from the power transmitter to the power receiver, and may be considered to correspond to the component of the generated electromagnetic field that transfers power from the power transmitter to the power receiver. For example, if there is no loading of the receive coil 107, no power will be extracted by the power receiver from the generated electromagnetic field (apart from losses). In such a scenario, the driving of the transmitter coil 103 may generate an electromagnetic field of potentially high field strength but the power level of the power transfer signal will be zero (apart from losses). In some situations, where a foreign object is present, the power transfer signal may be considered to include a component corresponding to the power transfer to the foreign object, and thus the power transfer signal may be considered to correspond to the power being extracted from the electromagnetic field generated by the power transmitter.

The power transfer signal may typically have a frequency between around 20 kHz to around 500 kHz, and for Ki compatible systems typically in the range between 20kHz to 80kHz. The transmitter coil 103 and the power receiving coil 107 are loosely coupled and thus the power receiving coil 107 picks up (at least part of) the power transfer signal from the power transmitter 101. Thus, the power is transferred from the power transmitter 101 to the power receiver 105 via a wireless inductive coupling from the transmitter coil 103 to the power receiving coil 107. The term power transfer signal is mainly used to refer to the inductive signal/ magnetic field between the transmitter coil 103 and the power receiving coil 107 (the magnetic flux signal), but it will be appreciated that by equivalence it may also be considered and used as a reference to an electrical signal provided to the transmitter coil 103 or picked up by the power receiving coil 107.

In the example, the power receiver 105 is specifically a power receiver that receives power via the receiver coil 107. However, in other embodiments, the power receiver 105 may comprise a metallic element, such as a metallic heating element, in which case the power transfer signal directly induces eddy currents resulting in a direct heating of the element. The power receiver may accordingly provide a load to the power transfer signal by comprising an inductive power extraction element which specifically may be a power extraction coil or an electrical (e.g. heating) element in which current is induced by the power transfer signal.

The system is arranged to transfer substantial power levels, and specifically the power transmitter may support power levels in excess of 50W, 100W, 500W, or 1 kW. For example, for Ki type applications, the power transfers may often be in excess of 100 W, and may be up to more than 2500W for very high power applications.

In the following, the operation of the power transmitter 101 and the power receiver 105 will be described with specific reference to an embodiment generally in accordance with the Specifications (except for the herein described (or consequential) modifications and enhancements) being developed by the Wireless Power Consortium. In particular, the power transmitter 101 and the power receiver 105 may follow, or substantially be compatible with, elements of the Ki Standards.

Many wireless power transfer systems, and in particular high power systems such as Ki, utilize resonant power transfer where the transmitter coil 103 is part of a resonance circuit and typically the receiver coil 107 is also part of a resonance circuit. In many embodiments, the resonance circuits may be series resonance circuits and thus the transmitter coil 103 and the receiver coil 107 may be coupled in series with a corresponding resonance capacitor. The use of resonance circuits tends to provide a more efficient power transfer.

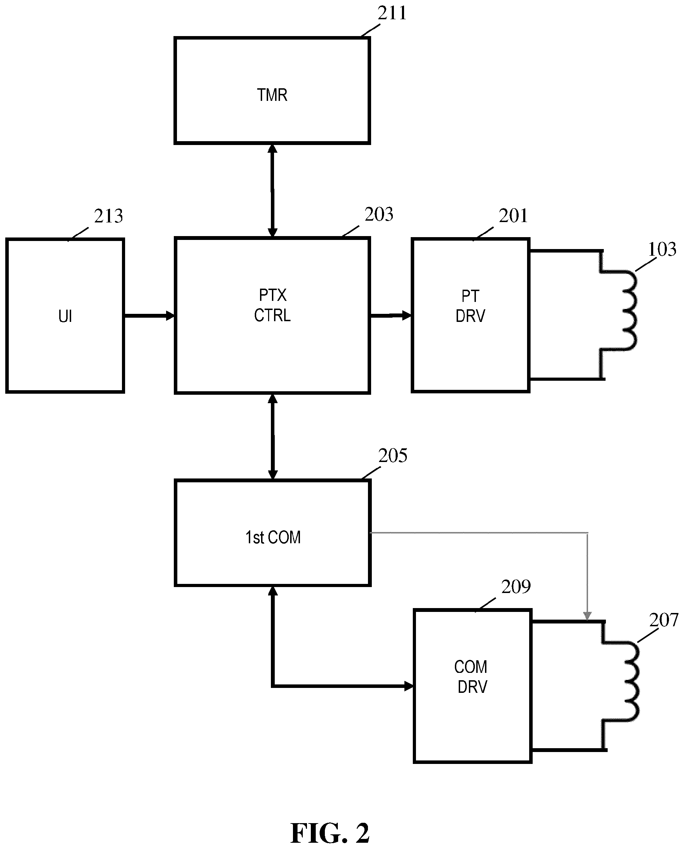

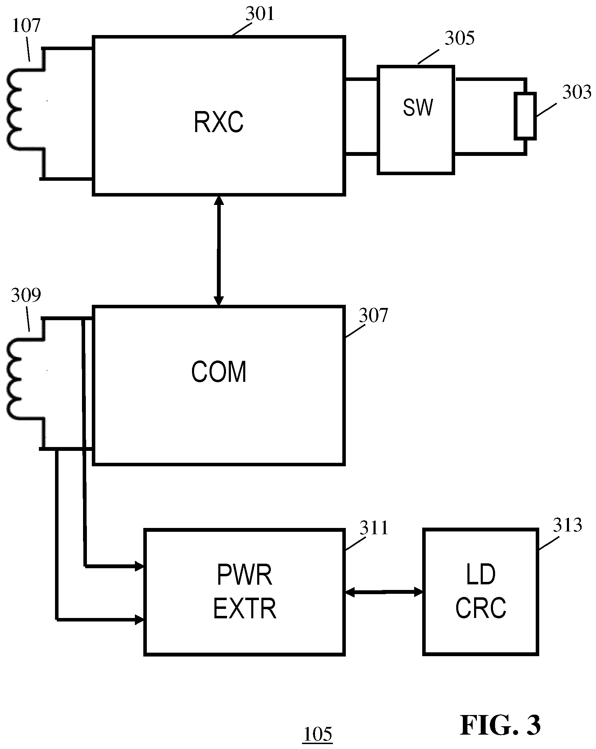

FIG. 2 illustrates elements of the power transmitter 101 and FIG. 3 illustrates elements of the power receiver 105 of FIG. 1 in more detail.

The power transmitter 101 includes a driver 201 which can generate a drive signal that is fed to the transmitter coil 103 which in return generates the electromagnetic power transfer signal, which provides a power transfer to the power receiver 105. The power transfer signal is provided (at least) during power transfer time intervals of the power transfer phase.

The driver 201 may typically comprise an output circuit in the form of an inverter, typically formed by driving a full or half bridge as will be well known to the skilled person.

The power transmitter 101 further comprises a power transmitter controller 203 which is arranged to control the operation of the power transmitter 101 in accordance with the desired operating principles. Specifically, the power transmitter 101 may include many of the functionalities required to perform power control in accordance with the Qi or Ki Specifications.

The power transmitter controller 203 is in particular arranged to control the generation of the drive signal by the driver 201, and it can specifically control the power level of the drive signal, and accordingly the level of the generated power transfer signal. The power transmitter controller 203 comprises a power loop controller controlling a power level of the power transfer signal in response to the power control messages received from the power receiver 105 during the power control phase.

In order to receive data and messages from the power receiver 105, the power transmitter 101 comprises a first communicator 205 which is arranged to receive data and messages from the power receiver 105 as well as transmit data and messages to the power receiver 105 (as will be appreciated by the skilled person, a data message may provide one or more bits of information).

In the approach, the communication is performed by modulation of a communication carrier signal that is generated by a first communication coil 207. The power transmitter specifically comprises a communication driver 209 which is coupled to the first communication coil 207. The communication driver 209 is arranged to generate a communication drive signal which is fed to the first communication coil 207 to generate the communication carrier signal. The communication driver 209 may typically be arranged to generate the communication drive signal/communication carrier signal to have a substantially different frequency than the power transfer drive signal/ power transfer signal. In many embodiments, the frequency of the communication carrier signal may be no less than 10, 100, or 500 times higher than the frequency of the power transfer signal. In many embodiments, the frequency of the communication drive signal/ communication carrier signal may have a frequency of no less than 500kHz, 1 MHz, or 10 MHz. Specifically for an NFC implementation, the communication carrier signal frequency may be 13.56 MHz.

The first communicator 205 is coupled to the communication driver 209 and is arranged to control this to modulate the communication drive signal/ communication carrier signal in order to transmit data to the power receiver (in the following references to the communication drive signal also include the implicit reference to the communication carrier signal as appropriate).

The modulation is in the specific example an amplitude modulation of the communication drive signal, and specifically a binary communication using Amplitude Shift Keying (ASK) is used. However, it will be appreciated that in other embodiments, the modulation may use other approaches, such as phase or frequency modulation of the communication drive signal.

In some embodiments, the first communicator 205 may for example receive data to be transmitted to the power receiver from the power transmitter controller 203 and in response generate a control modulation signal that is fed to the communication driver 209. The control modulation signal may for example be a binary signal that matches the data to be transmitted and the communication driver 209 may be arranged to generate the communication drive signal to have corresponding amplitude variations.

For communication from the power receiver to the power transmitter, the modulation of the communication drive signal may be a load modulation. The power receiver may be arranged to modulate the power transfer signal by varying a loading of the power transfer signal generated by the transmitter coil 103 in accordance with the data to be transmitted. The first communicator 205 may be arranged to sense variations in the voltage and/or current of the transmitter coil 103 and to demodulate the load modulation based on these. The skilled person will be aware of the principles of load modulation and therefore these will not be described in further detail.

In many embodiments, the communication may be in accordance with the Near Field Communication, NFC, Specifications and the power receiver may specifically include NFC functionality. In many embodiments, the first communicator 205, communication driver 209, and first communication coil 207 may implement (at least) the functionality of an NFC reader. Thus, in many embodiments, the communication drive signal/ communication carrier signal is a constant level (except for modulation) 13.56 MHz signal.

The following description will focus on examples where the communication between the power transmitter and power receiver is by NFC communication and specifically where modulation of the NFC carrier in the direction from the power transmitter to the power receiver is by Amplitude Shift Keying (ASK) and modulation of the NFC carrier in the direction from the power receiver to the power transmitter is by load modulation.

In the system of FIGs. 1-3, the communication is during the power transfer phase performed in communication time intervals. Specifically, the transmitter controller 203 may comprise/ implement a synchronizer which is arranged to synchronize the first communicator 205 such that the communication operation (typically both receiving and transmitting data) is performed in (and typically only in) the communication time intervals of the power transfer phase, i.e. in the time intervals that are assigned for communication.

This may substantially improve communication performance.

The approach may in some embodiments utilize a time division approach during the power transfer phase wherein operations, such as foreign object detection and communication, and power transfer may e.g. be performed in different time intervals thereby allowing the interference between these (specifically the impact of the power transfer on the foreign object detection/ communication) to be reduced substantially.

Specifically, for the wireless power transfer system, the power transfer signal may be subject to a repeating time frame which comprises at least one power transfer time interval and one communication time interval.

The power transmitter may be arranged to switch off the power transfer signal during the communication time interval and the power receiver may in some embodiments be arranged to disconnect the load during the reduced power time interval.

The power transmitter (and typically the power receiver) may then arrange for one or more operations (functions, processes, procedures) to be performed during the communication time interval, i.e. it may synchronize the execution of one or more operations of the power transmitter to occur during the communication interval. For example, it may typically synchronize the performance of the foreign object detection and communication to occur during the communication time interval. In this way, it can be achieved that the impact of the power transfer and the power transfer signal on the given operation, specifically the foreign object detection and the communication, can be reduced and often minimized.

FIG. 3 illustrates some exemplary elements of the power receiver 105.

The receiver coil 107 is coupled to a power receiver controller 301 which couples the receiver coil 107 to a load 303 via a switch 305 (i.e. it is a switchable load 305). The power receiver controller 301 includes a power control path which converts the power extracted by the receiver coil 107 into a suitable supply for the load 303. In addition, the power receiver controller 301 may include various power receiver controller functionality required to perform power transfer, and in particular functions required to perform power transfer in accordance with the Qi or Ki Specifications.

In order to support communication from the power receiver 105 to the power transmitter 101 the power receiver 105 comprises a second communicator 307 and a second communication coil 309. The second communication coil 309 is arranged to couple to the first communication coil 207 and thus the communication carrier signal induces a current (at least an emf) in the second communication coil 309.

The second communicator 307 is coupled to the second communication coil 309 and is arranged to determine amplitude variations in the induced signal and to demodulate amplitude modulations of the communication carrier signal. Thus, the second communicator 307 is arranged to decode data transmitted from the power transmitter by amplitude modulation of the communication carrier signal. It will be appreciated that in other embodiments, the second communicator 307 may be arranged to decode data modulated onto the communication carrier signal using other modulation formats such as frequency or phase modulation.

The second communicator 307 is further arranged to load modulate the communication carrier signal in order to transmit data from the power receiver to the power transmitter. Specifically, the second communicator 307 may comprise a load (such as a capacitor) which depending on the data to transmit can be switched between being coupled to the second communication coil 309 and not being coupled to the second communication coil 309. These load modulations may then be detected by the first communicator 205 of the power transmitter.

In the specific example, the second communication coil 309 and the second communicator 307 may provide NFC compatible communication operation. Specifically, the second communication coil 309 may be arranged to provide functionality corresponding to an NFC tag and to decode data that has been ASK modulated onto the communication carrier signal in accordance with the NFC specifications.

Thus, the second communicator 307 is arranged to transmit data to the power transmitter by varying the loading of the second communication coil 309 in response to data to be transmitted to the power transmitter 101. The load variations are then detected and demodulated by the power transmitter 101 as will be known to the person skilled in the art.

In the example, the second communicator 307 is furthermore arranged to demodulate amplitude, frequency, and/or phase modulation of the communication carrier signal in order to retrieve data transmitted from the power transmitter.

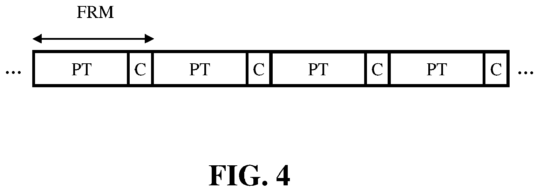

The system applies a repeating time frame during the power transfer phase where the time frame comprises at least one power transfer time interval and at least one communication time interval. An example of such a repeating time frame is illustrated in FIG. 4 where power transfer time intervals are indicated by PT and communication time intervals are indicated by C. In the example, each time frame FRM comprises only one communication time interval and one power transfer time interval. However, it will be appreciated that in other embodiments, other time intervals may also be included in a time frame or a plurality of communication time intervals and/or power transfer time intervals may be included in each time frame.

The power transfer driver 201 is controlled by the power transmitter controller 205 to only generate a drive signal during the power transfer time intervals and not during the communication time intervals. Thus, the driver generates the drive signal and thus the power transfer signal during the power transfer time intervals, whereas the drive signal and thus the power transfer signal is switched off during the communication time intervals.

In the power transfer phase, the power transmitter is thus arranged to perform power transfer during the power transfer time interval of the time frames of the power transfer phase. Specifically, during these time intervals, the power transmitter and the power receiver may operate a power control loop (the power control loop may be based on communication within communication time intervals corresponding to repeating time intervals). Thus, the level of the power being transferred may be dynamically varied.

In the communication time intervals of the time frames of the power transfer phase, the power drive signal is however switched off and thus no power transfer signal is generated during the communication time intervals.

The communication carrier signal may in addition to the communication also provide for an auxiliary power provision from the power transmitter to the power receiver. The auxiliary power transfer/ path may provide a low power supply that may be used to supply internal circuitry such as a user interface or power receiver control functionality. This may in particular be suitable for providing reduced power to the power receiver outside of the power transfer phase.

The communication carrier signal may accordingly be used to provide a second low level power transfer path from the power transmitter to the power receiver. To support this, the power receiver comprises a power extractor 311 which is arranged to extract power from the communication carrier signal. In the specific example, the power extractor 311 may accordingly extract power from the NFC carrier signal. The power extractor 311 is coupled to a load circuit 313 which may be provided by power extracted from the communication carrier signal by the power extractor 311. The load circuit 313 may typically be a control logic/ support function/ circuit of the power receiver, and/or may include a user interface of the power receiver. The load circuit 313 may for example include or consist in elements of the power receiver controller 301 and/or second communicator 307.

Thus, power may be provided from the power transmitter to the power receiver via communication carrier signal/ NFC carrier power harvesting. This may provide power to low power level, and e.g. low voltage voltage, electronics, such as the NFC hardware or a user interface. For example, for an NFC implementation, the extracted power may be up to around 200 mW.

The approach may thus for many practical applications allow a substantially reduced complexity and cost. For example, a power receiving device that includes a heating element as a load may directly be supplied by a power transfer signal directly inducting currents in the heating element. Indeed, in such an example, the described approach may in many cases allow a control and support circuitry as well as a user interface to be implemented and fully powered from the communication carrier signal, and specifically from an NFC carrier. Thus, the approach can in some cases allow a power receiving device to be designed that includes no electronic circuit powered by the power transfer signal. Thus, complex high voltage power extraction circuitry can be avoided completely. It may also be highly suitable for powering the power receiver outside of the power transfer phase, such as when the power transfer is initialized.

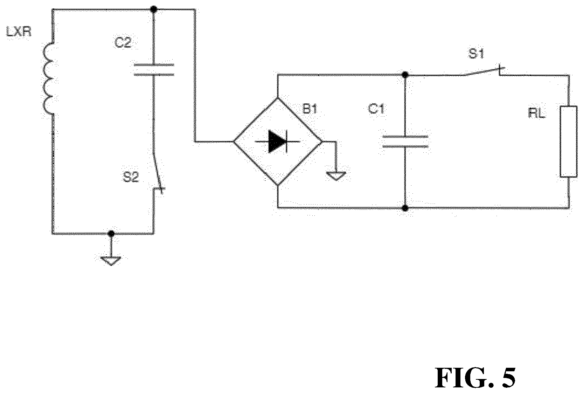

The power extractor 311 may be relatively simple and an example of power extracting circuitry/ power path is illustrated in FIG. 5.

FIG. 5 illustrates a circuit diagram of elements of an example of a power path of the power extractor 311. In the example, the second communication coil 309 is referred to by the designation LXR and when this is subjected to the communication carrier signal a corresponding AC voltage/ current is induced in the coil. The second communication coil 309 is coupled to a rectifier bridge B1 with a smoothing capacitor C1 coupled to the output of the bridge. Thus, a DC voltage is generated over the capacitor C1. The magnitude of the ripple on the DC voltage will depend on the size of the smoothing capacitor as well as on the load RL supplied by the power extractor 311.

The bridge B1 and smoothing capacitor C1 are coupled to a load RL via a switch S1 which can be used to switch on and off the power extraction/ harvesting. It will be appreciated that in many embodiments, the power extractor 311 may be directly and permanently coupled to the load RL with no switch being present. The load RL represents the load presented to the power extractor 311 by the load circuit 313.

FIG. 5 further illustrates a load modulation capacitor C2 which can be connected or disconnected in parallel to the second communication coil 309 based on the switching of switch S2. The second communicator 307 may control the switch S2 to provide the desired load modulation.

Thus, the power extractor 311 may be implemented by a low complexity and low cost circuit.

In many embodiments, the wireless power transfer system and power transmitter may be arranged to operate in different phases/ modes.

In many embodiments, the wireless power transfer system, and thus the power transmitter and/or power receiver, may be arranged to operate in different phases and in particular it may operate in a power transfer phase in which the power transfer signal is generated, and thus in which the power transfer operation providing power to the load 303 is performed. In the power transfer phase, the power transmitter generates a power transfer drive signal and accordingly a power transfer signal. In the power transfer phase, power is provided/ transferred to the power receiver by the power transfer signal. As described previously, the power transfer signal may use a repeating time frame where the power transfer signal is provided in power transfer time intervals and with the repeating time frame also comprising communication time intervals and/or foreign object detection time intervals. During the power transfer phase, the communication carrier signal may also be generated when communication is performed during the communication time intervals.

In the power transfer phase, the power transmitter may accordingly operate in a power transfer mode in which the power transfer signal is generated by the power transfer driver generating the drive signal. In some embodiments, the power transfer signal/ drive signal may be generated continuously during the power transfer phase but in other scenarios it may be more intermittent and e.g. interrupted by communication or foreign object detection intervals. However, typically, the power transfer signal is generated for at least 70%, 80%, 90%, or 95% of the time when in the power transfer phase.

In addition, the wireless power transfer system may be arranged to operate in a standby phase in which the power transfer signal is not generated by the power transmitter, and thus where no power transfer signal is present. In the standby phase, the power transmitter operates in a standby mode in which the power transfer driver 201 does not generate a power transfer drive signal and thus no drive signal is provided to the transmitter coil 103. In the standby mode/ phase, no power transfer signal is generated by the transmitter coil 103. In the standby phase/ mode, the power transmitter and system seek to minimize the power consumption.

For example, the system may operate in the standby phase/ mode in which no power receiver is detected to be present by the power transmitter. During this scenario, no power transfer signal is generated, and no communication carrier signal is generated. The power transmitter monitors for the presence of a power receiver. In particular, the power transmitter may at regular intervals generate an electromagnetic detection signal and if a load of this signal is detected, the power transmitter may consider that a power receiver is potentially present. The electromagnetic detection signal may be the communication carrier signal. When a power receiver is detected, the power transmitter may transition to a configuration phase.

In the configuration phase, configuration information/ data may be exchanged between the power transmitter and the power receiver. The configuration information/ data may provide information of properties of the power receiver and power transmitter to the complementary device. Each device may adapt an operational parameter based on the exchanged configuration data. Thus, the configuration phase may be used by the power transmitter and the power receiver to exchange specific information on the characteristics of the specific devices thereby allowing them to adapt the operation to the specific pairing of power transmitter and power receiver.

If the configuration phase is not successful, such as e.g. if the power transmitter does not receive suitable messages from the power receiver or an explicit termination is received, the power transmitter may return to the standby phase.

If the configuration and communication conclude successfully, the power transmitter proceeds to a connected phase. In the connected phase, the power transmitter and power receiver have established a communication and the devices may be adapted to each other. However, power transfer has not been initialized. During the connected phase, the communication carrier signal is generated, and it may specifically be continuously present during the connected phase. However, during the connected phase, no power transfer signal is generated. Further, during the connected phase, foreign object detection may be performed. Further, communication may be performed between the power transmitter and the power receiver. The power receiver may in many cases be arranged to extract power from the communication carrier signal (e.g. to power the internal functionality of the power receiver) during the connected phase.

The connected phase may in many scenarios be continued for a substantial time, including for hours or longer. For example, if a kitchen device, e.g. a blender, comprising a wireless power receiver as described is positioned on a worktop comprising a power transmitter as described, they may go through the configuration phase and thus enter the connected phase in an adapted and connected mode. The devices may then remain in this condition for a long time corresponding to the device, e.g. the blender, remaining on the worktop ready for being activated but not actually being switched on.

In response to a detection of a suitable event, the power transmitter and power receiver may transition from the connected phase to the power transfer phase. The event may typically be detected by the power receiver which may transmit a message to the power transmitter to request that the power transfer phase is entered. For example, if the user performs a suitable user action, such as pressing an on button, the power receiver may in response proceed to transmit a request to the power transmitter to request that the power transfer phase is entered.

The power transmitter (and the power receiver) may then proceed to transition to the power transfer.

Upon termination of the power transfer, the power transmitter and the power receiver may return to the idle phase or the connected phase depending on the specific cause of the termination (e.g. if the device is switched off, the power transmitter may return to the connected phase and if it is removed the power transmitter may return to the idle phase).

The configuration and the connected phases may together be referred to as initialization phases.

The connected phase and the standby phase are common in that no power transfer signal/ power drive signal is generated and thus are typically pre-power transfer phases. However, they are different in that the communication carrier is generated for a larger proportion of time when in the connected phase than during the standby phase. Indeed, in the connected phase the communication carrier signal may in many embodiments be generated continuously during the connected phase, or at least for no less than 50%, 60%, 70%, 80%, 90%, or 95% of the time in different embodiments. In contrast, during the standby phase, the communication carrier signal may be generated for no more than 1%, 2%, 5%, or 10% in different embodiments. Thus, the communication carrier signal is generated for a much higher proportion of time (at least 5, 10, 20 times more in different embodiments). These approaches allow the standby phase to have much smaller power consumption than the connected phase but allows the connected phase to allow lower latency and possibly higher data rate communication. It also allows higher auxiliary power provision and thus allows the power receiver to employ increased functionality.

The power transmitter may be arranged to employ a repeating time frame to the communication drive signal/ communication carrier signal during the standby phase. The repeating time frame is divided into communication time intervals and non-communication time intervals where the power level of the power transfer signal is much lower during the non-communication time intervals than during the communication time intervals, and indeed typically the communication carrier signal is completely switched off during the non-communication time intervals. The non-communication time intervals may also be referred to as reduced power time intervals.

The communication driver 209 is thus in the described approach arranged to, during the standby phase, generate a communication drive signal/ communication carrier signal which employs a repeating time frame with communication time intervals and non-communication time intervals. The communication time intervals are short compared to the non-communication time intervals but are generated with a substantially higher power/ amplitude level. Indeed, in most embodiments, the communication carrier signal is generated to only be present during the communication time intervals, i.e. during the non-communication time intervals the communication drive signal/ communication carrier signal may be switched off completely. The amplitude power level of the communication drive signal/ communication carrier signal may be zero during the non-communication time intervals.

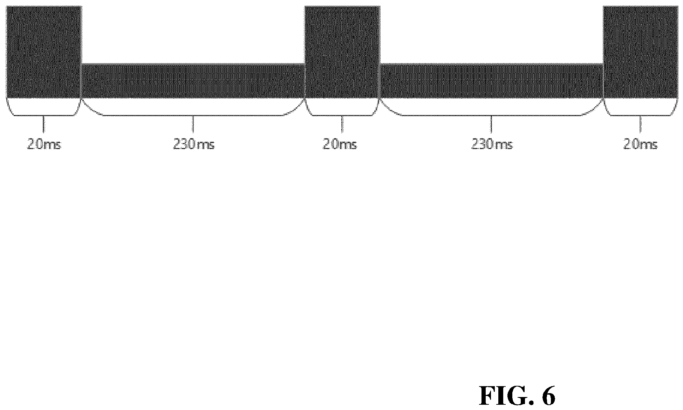

During the standby phase, the power transmitter is accordingly arranged to generate short "bursts" of the communication carrier signal but with the level of the communication carrier signal being very low at other times, and typically being fully switched off. FIG. 6 illustrates an example of the communication carrier signal that may be generated during the standby phase.

During the connected phase, the communication carrier signal may be continuously present. In some embodiments, it may also be subject to a repeating time frame but with the communication time intervals in which the communication carrier signal is present taking up the majority of the repeating time frame.

The previously described auxiliary power provision using the communication carrier signal may in particular be provided during the standby phase (as well as e.g. during the configuration and connected phase) and thus the communication carrier signal may during the standby (and possibly the configuration and connected) phase not only be used to provide a (typically bilateral) communication channel between the power transmitter and the power receiver but also provide an auxiliary power provision to the power receiver. Thus, auxiliary power provision during the standby phase may provide supply power that may be used e.g. to supply internal circuitry, such as the communication functionality, when no power transfer signal is present. For example, during a traditional connected phase of a Ki system, power may be harvested from a continuous NFC communication carrier signal. However, due to the communication carrier signal only being generated for a small part of the repeating time frame, the power that can be extracted during the standby phase is typically much smaller than during the connected phase.

As previously described, the standby phase may be a phase in which no power receiver is detected but in the described approach the standby phase may also be used as a standby phase for the scenario where a power receiver is continuously present. Thus, the power transmitter and power receiver may be arranged to operate in a standby phase which supports the continued presence of the power receiver while allowing the power transmitter to power down and operate in an extreme low power configuration.

For example, when a power receiver, such as a kitchen appliance is positioned on a power transmitter, there may be a substantial delay before the power receiver/ appliance is actually activated and used. In systems such as Ki the power transmitter and power receiver may in such a case enter a connected phase and remain in this phase until the power transfer is initialized. However, such an approach consumes a non-insignificant amount of power for potentially a very long time. In order to reduce power consumption, it may be advantageous to switch to the standby mode/ phase with lower power consumption. As another example, after a power transfer operation, the power receiver may remain in place for a possible subsequent power transfer operation which may be much later (for example, a kettle may remain in place for water to be boiled later). In such cases, it may be desirable for the power receiver to return to a standby phase rather than to a connected phase consuming higher power.

The power transmitter controller 203 is arranged to control the power transmitter to transition between different modes that operate in accordance with the functionality of the corresponding phases. Thus, the power transmitter controller 203 may be arranged to switch the power transmitter between a standby mode in which it operates in accordance with the functionality described for the standby phase, a connected mode in which it operates in accordance with the functionality described for the connected phase, and a power transfer mode in which it operates in accordance with the functionality described for the power transfer phase. The terms modes and phases may be used interchangeably. In many embodiments, it may be arranged to switch the power transmitter into other modes such as e.g. a configuration mode in which it operates in accordance with the functionality described for the configuration phase, a foreign object detection mode in which it operates in accordance with a foreign object detection phase, etc.

However, the switching between modes in order to achieve optimum performance is challenging. Indeed, in particular, the desire to achieve extremely low power consumption during times of inactivity while supporting high functionality, responsiveness, low lag, and an improved user experience and interaction is a difficult trade-off to optimize. Typically, the power transmitter does not have a good reference for determining when it is the right time to switch to the standby phase from the connected phase and when the power receiver is not active. The ideal time may vary substantially for different devices. E.g., it might take significant time to set up a cooking program for an air fryer and during this time the power receiver may be positioned on the power transmitter but with the user solely operating using the power receiver user interface. If the power transmitter decides to switch to the standby phase due to this prolonged inactivity, this may occur during a time when the user is operating the appliance user interface resulting in potential user dissatisfaction. However, it may be that the power receiver is a simple device that it may be advantageous to shift to the standby mode as soon as possible if not used. For example, for a simple kettle having only a single on/off function, the power activation may be instant or could take a long time before being required, and thus it is desired to enter the standby phase as soon as possible if no power transfer occurs.

The power receiver devices may in many practical wireless power transfer systems have very different user interface complexity, including e.g. a simple on/off button and increasing in complexity to e.g. a complex graphical user interface, such as often present on e.g. an airfryer or food processor. Also, dependent on the intended use of the power receiver device, the time between the device is activated and the actual start of the power delivery can be very different (e.g., a cordless kettle is expected to be powered almost immediately, while a cordless blender might require insertion of all the components inside before the activation). Accordingly, it may be very difficult to control the standby operation to be optimized, or even suitable, for different devices.

In the power transmitter of FIG. 2, the power transmitter controller 203 is arranged to use a configurable timing function to control the standby operation. The timing function is used together with a communication protocol/ process with the power receiver to adapt and configure the timing to provide a standby operation that is specifically optimized for the specific power receiver.

The power transmitter of FIG. 2 accordingly comprises a timer 211 which is coupled to the power transmitter controller 203. It will be appreciated that the timer 211 of FIG. 2 represents a functional feature that e.g. often may be implemented as part of the power transmitter controller 203. The timer 211 of FIG. 2 represents a function being performed rather than a specific entity as such, and specifically the operation indicated by the timer 211 can equally be considered part of, and represented by, the power transmitter controller 203.

The power transmitter controller 203 of FIG. 2 is arranged to initiate the timer 211 with a configurable timing value that is determined based on data transmitted from the power receiver to the power transmitter. It is further arranged to switch the power transmitter from the connected phase to the standby phase when the timer expires/ times out.

Specifically, the first communicator 205 receives a configuration message from the power receiver. The configuration message may typically be received during the configuration phase as part of the general communication and configuration of the power transmitter and the power receiver. However, in some embodiments, the configuration message may be communicated during other phases, such as possibly during the standby phase, connected phase, or a previous power transfer phase.

The configuration messages comprise a standby time out indication. The standby time out indication may in many embodiments be provided as an initial time value, but in other embodiments more complex indications may possibly be provided such as a time value that may be dependent on one or more parameters.

The power transmitter controller 203 may be arranged to initialize the timer 211 with an initial timing duration that is determined based on the received standby time out indication. Typically, the initial timing duration is simply set to the initial time value provided in the configuration message. In some embodiments, however, a more complex determination may be performed, such as e.g. modifying a received initial time value depending on whether a previous power transfer has been performed for the power receiver, based on a user setting of the power transmitter, or indeed any preferred calculation that will provide the desired compromise between power consumption and reaction performance to user activity.

Typically, the timer 211 is set to the initial timing duration in response to the power transmitter entering the connected phase. The timer 211 may then start and if the timer 211 times out/ expires while the power transmitter is still in the connected mode, the power transmitter controller 203 may control the power transmitter to transition to the standby mode. Thus, the power transmitter may be arranged to enter the connected phase and then transition (back) to the standby phase after a given duration that can be controlled by the power receiver, and thus which may be specifically adapted by the power receiver.

In some embodiments, the approach may provide a relatively low complexity functionality where the return to the standby mode after entering the connected mode may occur after a duration corresponding to the initial timing duration, i.e. the timer 211 may be started and left to count down (or up) until it times out. If the power receiver is still in the connected mode when this occurs, the power transmitter controller 203 may transition the power transmitter to the standby mode.

However, in many embodiments, the timer 211, and specifically the remaining time before expiry, may be modified in response to different events being detected.

Specifically, in some embodiments, the power transmitter may comprise a user interface 213 which is arranged to detect user actions. Such a user interface may typically simply be one or more push buttons but could in some embodiments be more complex user interfaces such as for example a complex touch display or a voice interface.

In some embodiments, the power transmitter controller 203 may be arranged to increase the remaining duration of the timer 211 in response to a detection of user action. In some embodiments, the remaining duration/ time before the timer 211 times out may be increased if any user action is detected, i.e. the detection of any user action may result in the timer being increased. In other embodiments, the power transmitter controller 203 may be arranged to increase the remaining duration only if a specific user action (or set of user actions) is detected. For example, for a push button interface, the remaining duration may in some embodiments be increased if a specific push button is pressed, or in some cases if any push button is present. In other embodiments where the user interface 213 e.g. comprises a voice interface, the duration may be increased in response to a specific voice command being detected, or in other embodiments if any voice command is detected.

Accordingly, in some embodiments, the delay before transitioning to the standby mode can be increased and the power transmitter can be maintained in the connected mode ready for starting power transfer as long as user action is detected to still occur, and thus the standby phase will only be entered only after the user activity stops for a sufficiently long time. In other embodiments, the standby phase can be postponed by the user actively requesting this, e.g. by pressing a specific push button.

In some embodiments, the first communicator 205 may be arranged to receive a message from the power receiver (typically during the connected phase) which includes a timer duration increase request from the power receiver. In response to receiving this message, the power transmitter controller 203 may increase the remaining duration for the timer 211. Thus, the power receiver may initiate a request for the standby mode to be postponed and communicate a message to the power transmitter resulting in the standby mode being extended. This may allow highly advantageous operation in many embodiments where the functionality of the power receiver can dynamically control the standby operation. For example, if the power receiver in some cases needs to perform some complex calculations or wait for a measurement before initializing power transfer, it may proceed to delay the standby phase to allow these to be successfully completed before it enters the standby mode, thereby allowing it to quickly enter a power transfer phase if that is the outcome of the calculations/ measurements. Otherwise, it may enter the standby mode at this time.

In many embodiments the timer duration increase request may be a user action indication which indicates that a user action has been detected at the power receiver. For example, as previously described for the power transmitter, the power receiver may include a user interface and user activity may be detected via this user interface. If user activity is detected, the power receiver may proceed to generate the timer duration increase request and transmit it to the power transmitter. In some cases, the timer duration increase request may for example indicate which user activity has been detected. In other embodiments, it may simply indicate that an(y) user activity has been detected.

Thus, in response to some events being detected, the remaining duration before the time out of the timer 211 may in some embodiments be increased. In some embodiments, the detection of an event, such as the detection of a user action or activity, may result in the power transmitter controller 203 resetting the timer to the initial timing duration. For example, whenever the power transmitter detects a user action or receives a message from the power receiver indicating a detection of a user action, the timer 211 may be reset to the original value and the countdown may be restarted. This may provide a highly efficient and user friendly operation in many scenarios, and may in particular allow low complexity operation yet allow a highly advantageous dynamic trade-off between power consumption and user action response times.

In some embodiments, the increase in the remaining duration may be by a predetermined amount, such as e.g. by a fixed number of seconds. For example, every time a push button is detected, the remaining duration may be increased by 5 seconds. In other embodiments, the increase in the remaining duration may be variable.

In some embodiments, the power transmitter controller 203 may be arranged to receive a timer duration increase value from the power receiver and to increase the remaining timer duration by an amount determined from the timer duration increase value. Typically, the power transmitter controller 203 is arranged to set the remaining duration to the timer duration increase value or to increase it by a value equal to the timer duration increase value. Thus, in some embodiments, the power receiver may control the postponement of the standby phase thereby allowing it to be closely adapted to the operation being performed by the power receiver. For example, if the power receiver is waiting for a measurement before deciding whether to proceed to the power transfer phase or not, it may transmit a timer duration increase request with a timer duration increase value that reflects how long the measurement is expected to take. The power transmitter may then proceed to postpone the entering of the standby mode by a suitable time.

The power transfer system may accordingly be arranged to enter a very low power consuming standby phase but with this operation being controlled by, and adapted to, the individual power receiver. The approach may further be arranged to initialize the timer with a default initial timing duration if no standby time out indication has been received from the power receiver. Thus, the power transmitter may enter the standby mode after a default duration after entering the connected mode unless a message has been received from the power receiver providing an initial timing duration. The approach may thus allow compatibility with a large range of power receivers including both power receivers that have functionality for providing the dynamic adaption of the duration before entering the standby phase, as well as for e.g. legacy power receivers that do not have such functionality. The approach may easily be introduced to existing systems and allows for a high degree of backwards compatibility.

The power transmitter of FIG. 2 is accordingly arranged to enter the very low power consumption standby mode of operation in a dynamic fashion that can be adapted to the specific power receiver.

In many embodiments, the power transmitter controller 203 may be arranged to further transition the power transmitter from the standby mode to the connected mode in response to receiving a message from the power receiver. The message may specifically be a wake-up message indicating that the power receiver may soon seek to enter the power transfer phase. For example, if the entering of the power transfer is based on a measurement that may be performed based on extracting power from the communication carrier signal when this is continuously present, the power receiver may transmit a wake-up message to the power transmitter which in response may proceed to transition from the standby mode to the connected mode in which the communication carrier signal is generated continuously. The power transmitter controller 203 may further initialize the timer 211 as previously described. Depending on the outcome of the measurement, the power receiver may then proceed to enter the power transfer phase or may revert back to inaction resulting in the timer 211 expiring after a suitable duration and the power transmitter returning to the standby mode.

In some embodiments, the power transmitter controller 203 may when entering the standby mode, proceed to initialize a standby timer with a standby timing duration. Thus, when entering the standby mode, the power transmitter controller 203 may set a new timer and when this expires it may be arranged to initiate transition to the connected phase. In some embodiments, the power transmitter controller 203 may automatically return from the standby mode to the connected mode after a given duration.

In many embodiments, the power receiver may transmit a standby timing indication to the power transmitter. In response to receiving this standby timing indication, the power transmitter controller 203 may determine the appropriate standby timing duration that the power transmitter controller 203 will set the standby timer to when entering the standby mode. Thus, the power receiver can control how long the power transmitter will remain in the low power standby mode before automatically waking up and transitioning to the connected mode.

Such an approach may allow a particularly advantageous performance where the power receiver for example can prepare for a function, set the timer of the power receiver and subsequently power down completely. The power transmitter may then after the given delay, enter the connected mode with the communication carrier signal being generated, e.g. continuously, resulting in the power receiver waking up due to the auxiliary power provision. It may then proceed to initialize a new power transfer operation.

For example, a bread maker may be arranged to be inactive for a given duration in order to let the dough rise. In the described approach this can be supported by a pause in the power provision that is controlled by the power receiver but which requires no power consumption or functionality of the power receiver to be active during the off/standby duration. Rather, the initiative to restart after the desired pause is transferred to the power transmitter which can support the desired functionality with low complexity. Further, such operations can be supported using a generic power transmitter that is not specifically designed to provide such a function for the specific power receiver.

In some embodiments, the power receiver may further transmit data to the power transmitter before entering the standby mode and this may be transmitted back to the power receiver upon entering the connected mode after the pause.

Thus, in some embodiments, the power receiver may be arranged to transmit standby wake up data to the power receiver prior to the pause. For example, it may be transmitted to the power transmitter as part of the configuration phase prior to the power transmitter entering the standby mode.

The approach may thus specifically provide an efficient standby operation for power receiver devices/ appliances that e.g. has a function that includes a period of time in which no power is required. The system allows for the power receiver device and power transmitter to enter a standby mode with the power receiver further providing a duration until it is required to wake up again.

For example, a bread maker may have kneaded the dough which then needs to rise for half an hour. The power receiver can send a wake-up timer (standby duration) with a value of half an hour to the power transmitter. It may further include some data related to the bread making procedure, such as the state of the breadmaker. Half an hour later, the power transmitter can then activate the system again and transmit the received data on the state of the power receiver back to the power receiver (as well as possibly the timing value that was received). The bread maker can then continue its program and will know where to start from the received data. Thus, a complete power down of the bread maker is possible. During the wait period, the power transmitter can continue to communicate to check if there are any system changes but with a lowered frequency. During the standby interval of the bread maker, it is in some embodiments even allowed to use another device as long as the bread maker is returned before the end of the pause. This can also be shown on a user interface of the transmitter. If the bread maker is not placed back in time the power receiver can decide if it wants to continue its program.

When the power transmitter transitions from the standby mode to the connected mode, the power transmitter may transmit a wake up message to the power receiver. The wake up message may include data dependent on the standby wake up data previously received from the power receiver. For example, the standby wake up data may in some embodiments simply repeat the previously received standby wake up data, i.e. the power transmitter may transmit the previously received data back to the power receiver. Indeed, in some embodiments, the power transmitter may have no knowledge of the meaning of any of the received standby wake up data and it may simply blindly retrieve stored data and transmit it back. Thus, effectively in some embodiments, the power receiver may in such cases use the power transmitter as a data store to store data during a standby/ pause duration. The approach may for example support very low complexity power receivers, such as e.g. power receiver that do not include sufficient non-volatile memory to store all the data.

The described approach may allow for a very efficient standby system where power consumption can be reduced to very small levels while at the same time providing suitable user operation and responsiveness. It may provide an approach that is very flexible, and which can adapt to the specific power receiver device, including user actions and interfacing typically associated with such a power receiver device.

The described approach is in many embodiments accordingly arranged to adapt to take into account that the preferred time for different power receiver devices/ appliances to enter the standby mode can be significantly different (e.g., 30 seconds for a kettle and 5 minutes for a blender). It may allow e.g. an appliance manufacturer to specify the preferred standby timeout in the appliance configuration, allowing the power transmitter to read it back and set up the standby timer during system configuration.

The power transmitter may in many embodiments use such functionality to transition to the standby mode when power transfer is not initiated within the duration corresponding to the standby timeout.

In some embodiments, the power receiver may be arranged to specify any initial timing duration including possibly an infinite amount of time (and thus the power transmitter will not switch to the standby mode), but in many embodiments, the initial timing duration may typically be restricted to a given range, e.g. by a suitable Standards body or regulatory committee. In this case, the power transmitter may limit the initial duration for the timer to the value provided by the standardization or regulatory committee and inform the power receiver about the limit.

In many embodiments, after configuration is completed and the power transmitter has entered to connected mode, the system may enter a state of waiting to enable the power transfer and switch to the power transfer phase. In this state, the user interface of the power receiver device may be powered via the auxiliary power provision using the communication carrier signal and therefore may be active and manipulated by the user. Every time a user interacts with the user interface, the power receiver device may register it and inform the power transmitter that user interaction is ongoing. The power transmitter may in response adjust or reset the remaining timing duration, possibly with the adjustment being dependent on a property of the user action (e.g. which user action is performed) as indicted by data transmitted to the power transmitter.

In a practical embodiment, the power receiver device might provide the exact amount of time dependent on the frequency and type of user actions to extend the standby timeout.

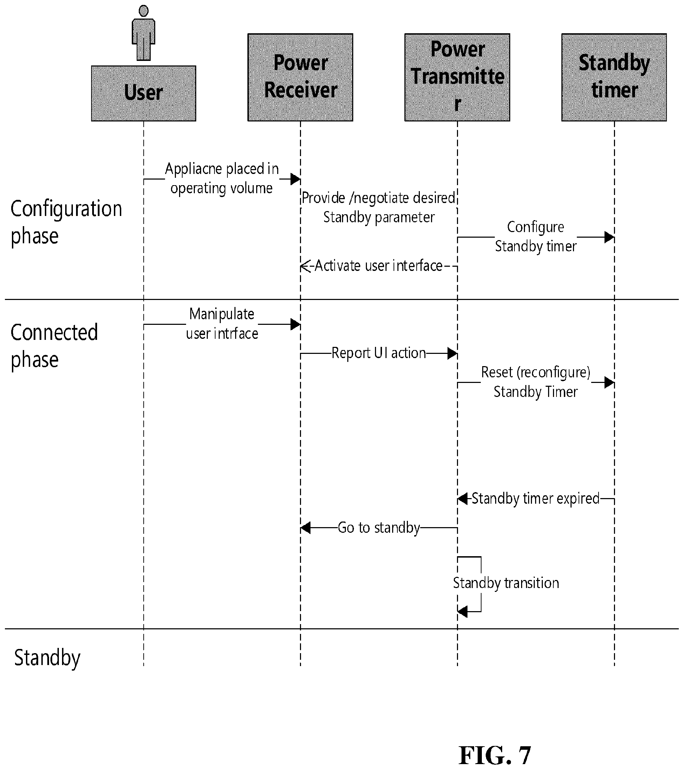

FIG. 7 illustrates an example of suitable communication exchange/ protocol that may be used. The exchange and actions may include the following:
a. The power receiver provides desired standby timeout upon placement on the power transmitter or waking up from standby.
b. The power transmitter configures the standby timer with the standby timeout value received from the power receiver and moves the system to the connected phase.
c. While connected, the power receiver informs the power transmitter if the user manipulated the user interface.
d. The power transmitter resets the standby timer if it receives a command from the power receiver indicating that the user manipulated the user interface.
e. The power transmitter moves the system to standby transfer if the standby timeout expires.

When the power receiver device is in standby mode, there should preferably be a means to start up the power receiver again. The power transmitter can check if there is a change in the system in different ways including object detection and communication. Object detection means a physical change in the system needs to happen, meaning moving the device or inserting a different object. This is typically less user friendly, so wake up through communication is often preferred. The fastest way of detecting a change is if a flag is visible in the configuration data (NDEF message) from the power receiver. The power receiver can with such a flag indicate that it wants to be activated again or stay in standby mode. This flag can be activated by a user action, for example a button press. Since the NDEF message is transmitted during the configuration of the communication, the duration is short, and the power consumption limited.

When the system is in standby mode with a power receiver present, the amount of (NFC) communication of the power transmitter can be reduced, since no change in the system is expected (the power receiver is not moved, no other objects are placed). A power transmitter may e.g. check for changes every 100-200ms when the system is in standby without a power receiver present. However, in the standby mode when a power receiver remains present, this may often be reduced to e.g. once every 1-10 seconds. Such an approach may provide a very substantial reduction in power as the communication carrier signal is required only for very short time intervals which are only required very rarely. The duration been time slots of active communication carrier signal could in some cases be set in response to a message from the power receiver. For example, it could be set by the power receiver during the configuration phase thereby allowing it to be adapted to the specific power receiver device and the function provided by this. This may reduce the power consumption of the system substantially with only a minor impact on the user experience. When a change is detected during the standby phase, such as e.g. it is detected that the power receiver device is removed, then the frequency of the communication carrier signal may be increased, e.g. it may be returned to a typical interval suitable for detecting new power receivers, e.g. it may return to a time between communication carrier signal time intervals in the interval of around 100-200ms.

Thus, in some embodiments, the communication driver 209 may be arranged to generate the communication drive signal in repeated time intervals when in the standby mode, such as e.g. illustrated in FIG. 6. In such embodiments, the power transmitter controller 203 may be arranged to set a timing parameter, such as specifically the frequency/ duration between/ or duration of, the repeated time intervals based on a timing message that is received from the power receiver.

It will be appreciated that the above description for clarity has described embodiments of the invention with reference to different functional circuits, units and processors. However, it will be apparent that any suitable distribution of functionality between different functional circuits, units or processors may be used without detracting from the invention. For example, functionality illustrated to be performed by separate processors or controllers may be performed by the same processor or controllers. Hence, references to specific functional units or circuits are only to be seen as references to suitable means for providing the described functionality rather than indicative of a strict logical or physical structure or organization.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units, circuits and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

It will be appreciated that the reference to a preferred value does not imply any limitation beyond it being the value determined in the foreign object detection initialization mode, i.e. it is preferred by virtue of it being determined in the adaptation process. The references to a preferred value could be substituted for references to e.g. a first value.

Furthermore, although individually listed, a plurality of means, elements, circuits or method steps may be implemented by e.g. a single circuit, unit or processor. Additionally, although individual features may be included in different claims, these may possibly be advantageously combined, and the inclusion in different claims does not imply that a combination of features is not feasible and/or advantageous. Also the inclusion of a feature in one category of claims does not imply a limitation to this category but rather indicates that the feature is equally applicable to other claim categories as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus references to "a", "an", "first", "second" etc. do not preclude a plurality. Reference signs in the claims are provided merely as a clarifying example shall not be construed as limiting the scope of the claims in any way.

## Claims

1. A power transmitter (101) for wirelessly providing power to a power receiver (105) via an inductive power transfer signal, the power transmitter (101) comprising:
a power transfer coil (103) arranged to generate the power transfer signal;
a power transfer driver (201) arranged to generate a power transfer drive signal for the power transfer coil (103) to generate the power transfer signal during a power transfer phase;
a communication coil (207) arranged to generate a communication carrier signal;
a communication driver (209) arranged to generate a communication drive signal for the communication coil to generate the communication carrier signal;
a communication unit (205) arranged to communicate with the power receiver (105) using modulation of the communication carrier signal;
wherein the communication unit (205) is arranged to receive a configuration message from the power receiver (105), the configuration message comprising a standby time out indication;
a mode controller (203) arranged to control the power transmitter to switch the power transmitter between different modes including:
a power transfer mode in which the power transfer signal is generated by the power transfer driver generating the drive signal;
a connected mode in which no power transfer signal is generated and during which the communication carrier is generated for no less than 50% of the time;
a standby mode in which no power transfer signal is generated and during which the communication carrier is generated for no more than 10% of the time;
the mode controller (203) in the connected mode being arranged to initiate a timer with an initial timing duration determined in dependence on the standby time out indication; and
to transition the power transmitter from the connected mode to the standby mode in response to the timer expiring.

2. The power transmitter of claim 1 wherein the mode controller circuit (203) is arranged to initiate the timer in response to the power transmitter entering the connected mode.

3. The power transmitter of claim 1 or 2 further comprising a user interface (213) for detecting user actions; and wherein the mode controller circuit (203) is arranged to increase a remaining duration for the timer in response to a detection of a user action.

4. The power transmitter of any previous claim wherein the communication unit (205) is arranged to receive a timer duration increase request from the power receiver (105); and wherein the mode controller circuit (203) is arranged to increase a remaining duration for the timer in response to receiving the timer duration increase request from the power receiver (105).

5. The power transmitter of claim 4 wherein the timer duration increase request is a user action indication indicative of a user action being detected at the power receiver (105).

6. The power transmitter of claim 4 or 5 wherein the mode controller circuit (203) is arranged to reset the timer to the initial timing duration in response to receiving the timer duration increase request.

7. The power transmitter of any previous claims 4-6 wherein the timer duration increase request comprises a timer duration increase value and the mode controller circuit (203) is arranged to increase a remaining timer duration for the timer by an amount determined in dependence on the timer duration increase value.

8. The power transmitter of any previous claims wherein the mode controller circuit (203) may be arranged to initialize the timer with a default initial timing duration if no standby time out indication has been received from the power receiver (105).

9. The power transmitter of any previous claims wherein the mode controller circuit (203) is arranged to initiate transition of the power transmitter from the standby mode to the connected mode in response to receiving a message from the power receiver (105).

10. The power transmitter of any previous claims wherein the communication driver (209) is arranged to generate the communication drive signal in repeated time intervals when in the standby mode; and the mode controller circuit (203) is arranged to set a timing parameter for the repeated time intervals in response to a timing message received from the power receiver (105).

11. The power transmitter of any previous claim wherein the mode controller circuit (203) is arranged to initialize a standby timer with a standby timing duration upon entering the standby mode; and to initiate transition to the connected phase on expiry of the standby timer (211).

12. The power transmitter of claim 11 wherein the mode controller circuit (203) is arranged to determine the standby timing duration in dependence on a standby timing indication received from the power receiver (105).

13. The power transmitter of claim 11 or 12 wherein the communication unit (205) is arranged to receive standby wake up data from the power receiver (105); and the mode controller circuit (203) is arranged to control the communication unit (205) to transmit a wake up message to the power transmitter when transitioning to the connected phase on expiry of the standby timer (211); the wake up message comprising data dependent on the standby wake up data received from the power receiver (105).

14. A method of operation for a power transmitter (101) wirelessly providing power to a power receiver (105) via an inductive power transfer signal, the power transmitter (101) comprising:
a power transfer coil (103) arranged to generate the power transfer signal;
a communication coil (207) arranged to generate a communication carrier signal;
and the method comprising:
generating a power transfer drive signal for the power transfer coil (103) to generate the power transfer signal during a power transfer phase
generating a communication drive signal for the communication coil to generate the communication carrier signal;
communicating with the power receiver (105) using modulation of the communication carrier signal;
receiving a configuration message from the power receiver (105), the configuration message comprising a standby time out indication;
controlling the power transmitter to switch the power transmitter between different modes including:
a power transfer mode in which the power transfer signal is generated by the power transfer driver generating the drive signal;
a connected mode in which no power transfer signal is generated and during which the communication carrier is generated for no less than 50% of the time;
a standby mode in which no power transfer signal is generated and during which the communication carrier is generated for no more than 10% of the time;
initiating a timer with an initial timing duration determined in dependence on the standby time out indication; and
transitioning the power transmitter from the connected mode to the standby mode in response to the timer expiring.

15. A wireless power transfer system comprising for wirelessly providing power to a power receiver (105), the wireless power transfer system comprising a power transmitter (101) in accordance with any of the previous claims 1-13.
